(19) Europäisches Patentamt
European Patent Office
Office européen des brevets

(11) **EP 2 465 830 A1**

(12) **EUROPEAN PATENT APPLICATION**
published in accordance with Art. 153(4) EPC

(43) Date of publication:
**20.06.2012 Bulletin 2012/25**

(51) Int Cl.:
**C03C 4/02** (2006.01)   **C03C 3/095** (2006.01)
**B60J 1/00** (2006.01)

(21) Application number: **10808262.9**

(22) Date of filing: **13.08.2010**

(86) International application number:
**PCT/JP2010/063777**

(87) International publication number:
**WO 2011/019079 (17.02.2011 Gazette 2011/07)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **13.08.2009 JP 2009187726**

(71) Applicant: **Asahi Glass Company, Limited
Tokyo 100-8405 (JP)**

(72) Inventors:
• **OKADA, Shoshiro
  Tokyo 100-8405 (JP)**
• **AKADA, Shuichi
  Tokyo 100-8405 (JP)**

(74) Representative: **Müller-Boré & Partner
Patentanwälte
Grafinger Straße 2
81671 München (DE)**

(54) **HIGH-TRANSMITTANCE LIGHT-COLORED GLASS, AND PROCESS FOR PRODUCTION OF THE GLASS**

(57)    To provide a high transmittance light-colored glass having a high Tva (at least 60%), a low Te (at most 60%), a low Pe (at most 6.0%) and λd of from 560 to 780 nm or λc of from -550 to -492 nm. A high transmittance light-colored glass comprising, as a glass matrix composition, $SiO_2$: from 63 to 75 mass%, $Al_2O_3$: from 0 to 5 mass%, $Na_2O$: from 5 to 15 mass%, $K_2O$: from 0 to 5 mass%, CaO: from 5 to 15 mass%, and MgO: from 0 to 10 mass%, and as coloring components, $Er_2O_3$: from 0.3 to 3.0 mass%, $t-Fe_2O_3$: from 0.05 to 0.5 mass%, and Se: from 1 to 30 ppm, and having Redox: more than 62%.

EP 2 465 830 A1

**Description**

TECHNICAL FIELD

The present invention relates to a high transmittance light-colored glass and a process for producing the glass.

BACKGROUND ART

Window glass for a vehicle such as a front glass (windshield) of a vehicle is required to have a high visible light transmittance (Tva) for the purpose of e.g. securing a forward visual field.
Further, a high heat shielding property is required, so that the inside temperature of the vehicle will not be too high. Specifically, the solar transmittance (Te) is required to be low.
Further, the color of glass is required to be an achromatic color or a warm color close thereto (the warm color will be described hereinafter). Specifically, the excitation purity (Pe) is required to be low, and the dominant wavelength (Ad) or complementary dominant wavelength ($\lambda c$) is required to be proper.
For example, Patent Document 1 discloses a glass composition which comprises $SiO_2$, $Na_2O$, CaO, MgO, $Al_2O_3$, $K_2O$, BaO, $Er_2O_3$ and $TiO_2$ and which has a Redox of from 15 to 62%. And, in its Examples, ones having a Tva of from 70.5 to 75.8%, a Pe of from 0.29 to 4.75% and a dominant wavelength (Dw) of from 479.3 to 529.5 nm are disclosed. Further, ones having a TSET of from 45.4 to 54.6 as an index in place of Te, are disclosed. Te takes a value slightly smaller than TSET.

PRIOR ART DOCUMENT

PATENT DOCUMENT

Patent Document 1: US Patent Application Publication No. 2007/99788

DISCLOSURE OF INVENTION

TECHNICAL PROBLEM

As mentioned above, the glass composition disclosed in Patent Document 1 is a glass composition for a glass which has a high Tva, a low Te and a low Pe. However, the dominant wavelength (Dw) is from 479.3 to 529.5 nm, whereby a warm color system cannot be realized.
It is an object of the present invention to provide a high transmittance light-colored glass which is provided with a visible light transmittance and heat shielding property suitable for a windshield of a vehicle and which has an extremely preferred soft color of warm color type, and a process for producing such a glass. More specifically, the object is to provide a high transmittance light-colored glass having a high Tva (at least 60%), a low Te (at most 60%), a low Pe (at most 6.0%) and $\lambda d$ of from 560 nm to 780 nm or $\lambda c$ of from -550 to -492 nm, and a process for producing such a glass.

SOLUTION TO PROBLEM

The present inventors have conducted an extensive study for the purpose of solving the above problem and as a result, have accomplished the present invention.
The present invention provides the following (1) to (5).
(1) A high transmittance light-colored glass comprising, as represented by mass% calculated as the following oxides (except for Se), as a glass matrix composition,

$SiO_2$: from 63 to 75 mass%,
$Al_2O_3$: from 0 to 5 mass%,
$Na_2O$: from 5 to 15 mass%,
$K_2O$: from 0 to 5 mass%,
CaO: from 5 to 15 mass%, and
MgO: from 0 to 10 mass%,
and as coloring components,
$Er_2O_3$: from 0.3 to 3.0 mass%,
t-$Fe_2O_3$: from 0.05 to 0.5 mass%, and
Se: from 1 to 30 ppm,

and having

Redox: more than 62%.

(2) The high transmittance light-colored glass according to the above (1), which has, in a glass plate having a plate thickness of 4 mm,

visible light transmittance (Tva): at least 60%,
solar transmittance (Te): at most 60%,
excitation purity (Pe): at most 6.0%, and
dominant wavelength (λd): from 560 to 780 nm, or complementary dominant wavelength (λc): from -550 to -492 nm.

(3) The high transmittance light-colored glass according to the above (1) or (2), comprising, as represented by mass% calculated as the following oxides (except for Se), as a glass matrix composition,

$SiO_2$: from 69 to 73 mass%,
$Al_2O_3$: from 1.5 to 3 mass%,
$Na_2O$: from 8 to 13 mass%,
$K_2O$: from 0 to 3 mass%,
CaO: from 7 to 13 mass%, and
MgO: from 1 to 8 mass%,
and as coloring components,
$Er_2O_3$: from 0.4 to 1.4 mass%,
t-$Fe_2O_3$: from 0.1 to 0.3 mass%, and
Se: from 1 to 6 ppm,
and having

Redox: more than 62% and at most 74%.

(4) The high transmittance light-colored glass according to the above (1) or (2), comprising, as represented by mass% calculated as the following oxides (except for Se), as a glass matrix composition,

$SiO_2$: from 69 to 73 mass%,
$Al_2O_3$: from 1.5 to 3 mass%,
$Na_2O$: from 8 to 13 mass%,
$K_2O$: from 0 to 3 mass%,
CaO: from 7 to 13 mass%, and
MgO: from 1 to 8 mass%, and as coloring components,
$Er_2O_3$: from 0.4 to 1.4 mass%,
t-$Fe_2O_3$: from 0.1 to 0.3 mass%, and
Se: from 6 to 30 ppm,

and having

Redox: more than 74% and at most 95%.

(5) A process for producing a high transmittance light-colored glass, which comprises heating and melting glass raw materials within a temperature range of from 1,480°C to 1,660°C so that the glass composition after the production would be, as represented by mass% calculated as the following oxides (except for Se), as a glass matrix composition,

$SiO_2$: from 63 to 75 mass%,
$Al_2O_3$: from 0 to 5 mass%,
$Na_2O$: from 5 to 15 mass%,
$K_2O$: from 0 to 5 mass%,
CaO: from 5 to 15 mass%, and
MgO: from 0 to 10 mass%,
and as coloring components,
$Er_2O_3$: from 0.3 to 3.0 mass%,
t-$Fe_2O_3$: from 0.05 to 0.5 mass%, and
Se: from 1 to 30 ppm,
and would have

Redox: more than 62%.

In this specification, " to " is used to mean that the numerical values before and after "to" are included as the lower limit value and the upper limit value, respectively, unless otherwise specified.

ADVANTAGEOUS EFFECTS OF INVENTION

According to the present invention, it is possible to provide a high transmittance light-colored glass which is provided with a visible light transmittance and heat shielding property suitable as a glass plate for a windshield, a side window, a rear window or other windows of a vehicle and which has an extremely preferred soft color of a warm color type.

Further, according to the present invention, it is possible to provide a high transmittance light-colored glass having a high Tva (at least 60%), a low Te (at most 60%), a low Pe (at most 6.0%) and $\lambda$d of from 560 nm to 780 nm or $\lambda$c of from -550 to -492 nm.

Further, according to the present invention, color adjustment during the production becomes easy, and it is possible to provide a high transmittance light-colored glass with a stabilized quality.

DESCRIPTION OF EMBODIMENTS

The high transmittance light-colored glass of the present invention (hereinafter referred to as the glass of the present invention) will be described.

The glass of the present invention is a glass comprising from 63 to 75 mass% of $SiO_2$, from 0 to 5 mass% of $Al_2O_3$, from 5 to 15 mass% of $Na_2O$, from 0 to 5 mass% of $K_2O$, from 5 to 15 mass% of CaO, from 0 to 10 mass% of MgO, from 0.3 to 3.0 mass% of $Er_2O_3$, from 0.05 to 0.5 mass% of $t\text{-}Fe_2O_3$ and from 1 to 30 ppm of Se and having a Redox of more than 62%.

The respective components in the glass of the present invention will be described.

In the following, "%" means "mass%", unless otherwise specified. Further, in the present invention, the sum of the glass matrix composition is represented by 100%, and the mass of a coloring component is represented by a ratio to the mass of the glass matrix composition.

Further, in the present invention, the proportion of each component of the glass is calculated as an oxide which is indicated, and with respect to a prepared sample, the content of each component element was measured by a fluorescent X-ray analysis or an ICP plasma emission analysis, and the measured each element, except for Se is assumed to be entirely present in the form of such an oxide for the purpose of the calculation. However, with respect to Se, the content means the content of the simple substance of Se i.e. not an oxide.

The matrix composition of the glass of the present invention will be described. $SiO_2$ will be described.

$SiO_2$ is a component to form the matrix of glass.

In the glass of the present invention, the content of $SiO_2$ is from 63 to 75%, preferably from 69 to 73%. If the content of $SiO_2$ is too low, devitrification is likely to result, and if it is too high, melting tends to be difficult.

Now, $Al_2O_3$ will be described.

In the glass of the present invention, the content of $Al_2O_3$ is from 0 to 5%. If the content is higher than this range, melting of the glass tends to be difficult. Further, the content of $Al_2O_3$ is preferably from 1.5 to 3%. When the content is within such a preferred range, it is possible not only to prevent deterioration of the melting of the glass, but also to prevent weathering.

Here, "weathering" means that the glass surface is reacted with e.g. carbon dioxide gas, water, etc. in air. If weathering occurs on the glass surface, a layer of a composition different from the desired glass will be formed, whereby the glass may look white or blue.

Now, $Na_2O$ will be described.

In the glass of the present invention, the content of $Na_2O$ is from 5 to 15%, preferably from 8 to 13%. If the $Na_2O$ content is too low, it tends to be difficult to melt the glass, and if it is too high, weathering is likely to occur, and therefore, it is preferably within the above range.

Now, $K_2O$ will be described.

In the glass of the present invention, the content of $K_2O$ is from 0 to 5%, preferably from 0 to 3%. When $K_2O$ is within such a range, it is easy to melt the glass, and weathering is less likely to occur.

Here, $Na_2O$ and $K_2O$ may be substituted by other alkali metal oxides (such as $Li_2O$, $Rb_2O$, $Cs_2O$ and $Fr_2O$) to some extent (at a level of at most 2%).

Now, CaO will be described.

In the glass of the present invention, the content of CaO is from 5 to 15%, preferably from 7 to 13%. When CaO is within such a range, it becomes easy to melt the glass.

Now, MgO will be described.

In the glass of the present invention, the content of MgO is from 0 to 10%, preferably from 1 to 8%. When MgO is within such a range, devitrification of glass is less likely to occur.

Here, CaO and MgO may be substituted by other alkaline earth metal oxides (such as BeO, SrO, BaO and RaO) to some extent (at a level of at most 2%).

Now, coloring components ($Er_2O_3$, t-$Fe_2O_3$, FeO and Se) in the glass of the present invention will be described.

$Er_2O_3$ will be described.

In the glass of the present invention, the content of $Er_2O_3$ is from 0.3 to 3.0%, preferably from 0.4 to 1.4%. Within such a range, it is possible to obtain a warm color which is close to a high transmittance achromatic color.

Further, when the content of $Er_2O_3$ is within a range of more than 1.1 % and less than 1.5%, it is possible to obtain a color of a warm color type, which is close to an achromatic color.

Further, when the content of $Er_2O_3$ is more than 0.3% and less than 1.1 %, it is possible to obtain a warm color with a lower Er content. When compared with the above case where the content is more than 1.1 % and less than 1.5%, Pe (excitation purity) tends to be higher to some extent, but the raw material cost can be suppressed to be low since it is possible to reduce the Er component raw material to be used.

Now, $Fe_2O_3$ will be descried.

The glass of the present invention contains a Fe element, and the content of the Fe element in the glass of the present invention is measured, and the content calculated on such an assumption that its entirety is present in the form of $Fe_2O_3$ (which may be referred to as "t-$Fe_2O_3$" or "the total iron") is from 0.05 to 0.5%, preferably from 0.1 to 0.3%, more preferably from 0.14 to 0.25%. In such a range, the heat shielding property represented by Te is improved. Here, the lower the value of Te, the higher the heat shielding property.

Here, in a case where the Redox is high as in the case of the glass of the present invention, the amount of FeO in the total iron increases. In the total iron, particularly FeO contributes to the improvement in the heat shielding property represented by Te. Accordingly, an increase of the amount of FeO in the total iron is preferred with a view to improvement of the heat shielding property represented by Te.

Now, Se will be described.

In the glass of the present invention, the content of Se is from 1 to 30 ppm. Further, in a case where the after-described Redox is more than 62% and at most 74%, Se is preferably contained in an amount of from 1 to 6 ppm. Within such a content, the excitation purity (Pe) will be low, or a preferred color of a warmer color type will be obtained.

Further, in a case where the after-described Redox is more than 74%, more preferably more than 74% and at most 95%, Se is preferably contained in an amount of more than 6 ppm and at most 30 ppm. Within such a content, the excitation purity (Pe) will be low, or a preferred color of a warmer color type will be obtained.

If the Se content exceeds 30 ppm, the visible light transmittance (Tva) tends to decrease. Further, the excitation purity (Pe) tends to increase too much, such being undesirable.

Se is a raw material which is volatile during the production of the glass, and accordingly, its content in the glass tends to be small as compared with its amount actually used as the raw material. Se is expensive as a raw material, and therefore, it is desired to minimize the degree of such volatilization.

Now, Redox will be described.

In the glass of the present invention, Redox is more than 62%, and it is preferably within a range of more than 62% and at most 74%, whereby the amount of Se to be used can be suppressed. When Redox is more than 74%, non-uniformity in color of the obtainable glass will be less, such being more preferred.

In the glass of the present invention, Redox means a value calculated in such a manner that the FeO content in the glass of the present invention is divided by the above t-$Fe_2O_3$ content and then multiplied by a factor. Specifically, it means a value obtained in such a manner that the glass of the present invention is dissolved by means of HF, then the content of bivalent iron ($Fe^{2+}$) is measured by an ICP plasma emission analysis, then the FeO content is calculated on such an assumption that the entirety is present in the form of FeO, and such a value is divided by the above t-$Fe_2O_3$ content and further multiplied by 111.134 as a factor.

That is, it is a value obtained by calculation by the following formula.

$$\text{Redox} = 111.134 \times (\text{FeO content}) \div (\text{t-Fe}_2\text{O}_3 \text{ content})$$

Redox can be adjusted by adding a reducing agent or an oxidizing agent, such as iron and steel slag, a carbon component (such as coal or coke), sodium nitrate, etc.

Further, the present inventors have found that when Redox exceeds 62%, the chromogenic effect of Se is suppressed. Further, it has been also found that reproducibility of the desired excitation purity (Pe) is increased. The details will be described later.

The glass of the present invention may contain an oxide of each of B, Zn, Pb and P in addition to the above components. Each of their contents calculated as oxides ($B_2O_3$, ZnO, PbO and $P_2O_5$) may be from 0 to 5%.

Further, it may contain an oxide of each of Ce, Ti, V and Mo. Each of their contents calculated as oxides ($CeO_2$, $TiO_2$, $V_2O_5$ and $MoO_2$) may be from 0 to 4%. When these elements are contained, the obtainable glass will have an ultraviolet ray-absorbing property, such being desirable.

Further, it may contain an oxide of Co, and its content calculated as an oxide (CoO) may be from 0 to 4 ppm. The oxide of Co is preferably employed to facilitate fine adjustment of the excitation purity of the glass. However, if its content is too high, it is likely to deteriorate Tva.

Further, the glass of the present invention may contain S, Sb, As, Cl and F. These elements may be intentionally incorporated from a melting-assisting agent or a clarifier, or may be contained as a contamination in the raw material. Further, they may be included also from e.g. the iron and steel slag which will be described next.

Further, it may contain an oxide of Sn. The oxide of Sn is able to suppress an umber color formation. The content calculated as its oxide ($SnO_2$) may be from 0 to 0.7%, preferably from 0.3 to 0.5%.

Further, it does not substantially contain an oxide of each of Cr, Ni and Cu, or an oxide of a rare earth element such as Nd, Y, etc. Here, "does not substantially contain" means not to be intentionally incorporated. Specifically, it means that the content of such an element is at most about 10 ppm in the glass.

Such a glass of the present invention is a glass having a Tva of at least 60%, a Te of at most 60%, a Pe of at most 6.0% and a λd of from 560 nm to 780 nm or a λc of from -550 to -492 nm. When λd or λc is within such a range, the glass will be one showing a warm color. These values are ones measured by a glass plate having a plate thickness of 4 mm.

Here, Tva is preferably at least 70%, more preferably at least 75%. Further, it is preferably at most 90%.

Further, Te is preferably at most 55%, more preferably at most 50%. When Te is within such a range, in a case where the glass of the present invention is used, for example, as a front glass of a vehicle, the driver of the vehicle will not substantially have a feeling of discomfort by heat rays, such being desirable.

Further, Pe is preferably at most 4.5%, more preferably at most 3.0%. When Pe is lower, the color tends to be achromatic, and in a case where the glass of the present invention is used, for example, as a glass for a vehicle, the color of the interior of the vehicle as seen from outside is not different from the actual color, such being desirable as being excellent in the artistic appearance. Further, when a driver looks out from the inside of a car, the color of e.g. a signal is seen more precisely, such being desirable.

λd (dominant wavelength) and λc (complementary dominant wavelength) represent wavelengths. Here, λd (dominant wavelength) is represented by a positive value, and λc (complementary dominant wavelength) is represented by a negative value.

The glass of the present invention preferably has a λd of from 560 nm to 650 nm, more preferably from 560 nm to 590 nm. Within such a range, it is possible to suppress the amount of $Er_2O_3$ to be used, and it becomes possible to obtain a color of a warm color type with a relatively low excitation purity at a lower raw material costs. Otherwise, λc is preferably from -530 nm to -492 nm. Within such a range, it is possible to obtain a warm color glass with a more reddish brown type warm tint.

Here, in the present invention, Tva and Te mean values measured by the method as prescribed in JIS R3106 (1998). Further, λc, λd and Pe mean values measured by the method as prescribed in JIS Z8701 (1982).

<PRODUCTION PROCESS>

The process for obtaining the glass of the present invention is not particularly limited. For example, it may be obtained by a conventional process. For example, powder glass raw materials were mixed to have a desired composition (i.e. the glass composition after the production) to obtain the glass composition of the present invention, and such glass raw materials are melted by a melting furnace (at a temperature of e.g. from about 1,480 to 1,660°C) to obtain molten glass, followed by forming a known forming process (such as a float process) to obtain a plate-form glass of the present invention. Here, in order to bring Redox to be within the range of the glass of the present invention, if a carbon component, iron and steel slag, etc. are incorporated to the raw materials, bubbles are likely to be included in the obtainable glass of the present invention. Therefore, in a case where a glass free from bubbles is required, before melting and forming the raw materials, molten glass is preferably subjected to defoaming treatment by a reduced pressure defoaming method. The treating conditions in the reduced pressure defoaming may be the same as usual.

For example, treating conditions as disclosed in JP-A-2006-298657 may be employed. The interior of the reduced pressure defoaming tank is preferably maintained to be from 1,100°C to 1,500°C, so that molten glass is continuously supplied to the reduced pressure defoaming tank and so that a temperature difference from the molten glass supplied from the melting tank is prevented from occurring. Further, at the time of conducting the reduced pressure defoaming method, a reduced pressure housing is vacuumed by a vacuum pump or the like from outside to maintain the interior of the reduced pressure defoaming tank disposed in the reduced pressure housing to be in a predetermined reduced pressure state. Here, the interior of the reduced pressure defoaming tank is preferably vacuumed to a level of from 38 to 460 mmHg (from 51 to 613 hPa).

Further, in the process of producing the glass of the present invention by such a production process, Se in the raw materials will be volatilized in an amount of from about 80 to 95 mass%. Therefore, in order to bring the Se content in the glass of the present invention to be from 1 to 30 ppm, Se in the raw materials is required to be from about 5 to 600 ppm.

The shape of the glass of the present invention is not particularly limited, but it is preferably a plate-form. The main surface of the glass of the present invention may be curved. It may, for example, be a glass to be used for a window glass for a vehicle (a car, etc). When it is used as a glass plate for a window of an automobile, its plate thickness is preferably within a range of from 2.0 mm to 6.0 mm, whereby the above-mentioned visible light transmittance (Tva) of at least 60%, the solar transmittance (Te) of at least 60%, the excitation purity (Pe) of at most 6.0%, and the dominant wavelength (λd) of from 560 to 780 nm or the complementary dominant wavelength (λc) of from -550 to -492 nm are obtainable.

In the process of obtaining the glass of the present invention which is provided with all of the above-mentioned Tva, Te, Pe and λd or λc simultaneously, the present inventors have found the following (i) and (ii).

(i) When Redox is increased, Tva increases, but the color forming degree of Se decreases.

(ii) When the content of $Fe^{2+}$ is increased, Te decreases. Further, when the $Er_2O_3$ content is increased so that λd or λc becomes within the range of the present invention, Tva tends to be low, and Pe tends to be low. Therefore, in order to bring Tva, Te, Pe and λd or λc to the desired values (within the ranges of the present invention), the contents of $Fe^{2+}$, $Fe^{3+}$, Se and $Er_2O_3$, and Redox are required to be within the specific ranges.

Now, (i) and (ii) will be described in detail. (i) will be described.

The present inventors have investigated the relation between Redox and the color forming degree (coloring effect) of Se.

Specifically, the following test was carried out.

Firstly, as the basis for calculation, t-$Fe_2O_3$ and the glass matrix composition ($SiO_2$, $Al_2O_3$, $Na_2O$, $K_2O$, CaO, MgO, t-$Fe_2O_3$ and BaO) were determined. The specific values were $SiO_2$:$Al_2O_3$:$Na_2O$:$K_2O$:CaO:MgO:t-$Fe_2O_3$:BaO=72: 1.8:12:0.5:11:2.5:0.2:0 (the numerical values here respectively represent mass%). As variables, the amount of Se (Se content) and the amount of a reducing agent (coke) were determined. A glass batch comprising the composition, Se and coke was melted and then solidified. Then, the obtained glass was processed into a sample of a shape suitable for the color measurement, and the spectral transmittance was measured by a spectral photometer in accordance with a method as prescribed in JIS Z8722, and further the chromaticity coordinate (x, y) in the XYZ color system was calculated. And, the sample was further subjected to a fluorescent X-ray analysis to measure the Se content. Then, the sample was dissolved by HF, and the FeO content was measured by an ICP plasma emission analysis, whereupon Redox was calculated.

Such an operation was repeated by changing only the amount of Se and the amount of coke. Here, due care was taken not to change the respective components ratio ($SiO_2$:$Al_2O_3$:$Na_2O$:$K_2O$:CaO:MgO:t-$Fe_2O_3$:BaO) of the glass composition.

Thus, the relation among the content of Se, Redox and the chromaticity of glass was investigated.

And, the finding as shown in Table 1 was obtained.

Table 1 is one wherein with respect to four types of glass different in Redox, the relation between the content of Se in the glass and the chromaticity of the glass is shown. For the same Redox, two types of glass having different Se contents were prepared.

Se is readily volatilized during the production of glass, and even if the Se content in the raw materials is made constant, the Se content in glass varies. Accordingly, the chromaticity of glass also varies. When Cases 1 and 3 are compared, the difference in the Se content in glass is the same i.e. 5 ppm, but the difference in the chromaticity of glass per 100 ppm of the Se content is small i.e. 0.070 in Case 3 where Redox is 75%. That is, in the present invention where Redox is more than 62%, the change in chromaticity of glass is small due to a very small variation in the Se content due to uncontrollable volatilization of Se, whereby it is easy to control the Se content in raw materials at the time of the production.

TABLE 1

| | | Case 1 | | Difference (△) | Case 2 | | Difference (△) | Case 3. | | Difference (△) | Case 4 | | Difference (△) |
|---|---|---|---|---|---|---|---|---|---|---|---|---|---|
| Redox (%) | - | 37 | 37 | - | 65 | 65 | - | 75 | 75 | - | 83 | 83 | - |
| Se (ppm) | (A) | 3 | 8 | 5 | 4 | 8 | 4 | 9 | 14 | 5 | 9 | 15 | 6 |
| x | - | 0.31 | 0.32 | 0.0116 | 0.31 | 0.32 | 0.0061 | 0.31 | 0.32 | 0.0028 | 0.31 | 0.31 | 0.0033 |
| y | - | 0.32 | 0.33 | 0.0077 | 0.32 | 0.33 | 0.0040 | 0.32 | 0.33 | 0.0021 | 0.32 | 0.32 | 0.0023 |
| $(\Delta x^2 + \Delta y^2)^{(1/2)}$ | (B) | - | - | 0.0139 | - | - | 0.0073 | - | - | 0.0035 | - | - | 0.0040 |
| Per 100 ppm of Se | (B/A×100) | - | - | 0.279 | - | - | 0.183 | - | - | 0.070 | - | - | 0.066 |

In Table 1, "x" and "y" represent the chromaticity coordinate in the XYZ color system.

As shown in Table 1, the present inventors have quantitatively grasped the relation between Redox and the coloring effect of Se ((C) in Table 1) and have found that the higher the Redox, the lower the coloring effect of glass by Se. On the basis of such a finding, the present inventors have arrived at the present invention.

Further, in addition, the present inventors have found that when Redox is high, reproducibility of the desired excitation purity (Pe) is increased. Heretofore, Se is volatilized in a process for producing glass, but it has been difficult to control the amount of such volatilization, and the content of Se remaining in the obtained glass tends to be unstable. As a result, the excitation purity (Pe) of the obtainable glass may be different from the desired value.

However, in the case of the glass of the present invention where Redox is high, reproducibility of the excitation purity (Pe) of the obtainable glass becomes high.

Now, (ii) will be described.

The present inventors have quantitatively grasped the relation between the content of $Er_2O_3$ and the chromaticity in order to optimize the contents and the ratio of $Fe^{2+}$, $Fe^{3+}$, Se and $Er_2O_3$ in glass to bring Tva, Te, Pe, Ad or $\lambda c$ to the desired values.

Specifically, the following test was carried out.

Firstly, as the basis for calculation, $t-Fe_2O_3$ and the glass matrix composition ($SiO_2$, $Al_2O_3$, $Na_2O$, $K_2O$, CaO, MgO, $t-Fe_2O_3$ and BaO) were determined. The specific values were $SiO_2:Al_2O_3:Na_2O:K_2O:CaO:MgO:t-Fe_2O_3:BaO=72:1.8:12:0.5:11:2.5:0.1:0$ (the numerical values here respectively represent mass%). As a variable, the amount of Er ($Er_2O_3$ content) was determined. A glass batch comprising only the above composition and Er was melted and then solidified.

Then, the obtained glass was processed into a sample of a shape suitable for the color measurement, and the spectral transmittance was measured by a spectral photometer in accordance with the method as prescribed in JIS Z8722, and further, the chromaticity coordinate (x, y) in the XYZ color system was calculated.

Such an operation was repeated by changing only the amount of Er. Here, due care was taken not to change the respective components ratio

($SiO_2:Al_2O_3:Na_2O:K_2O:CaO:MgO:t-Fe_2O_3:BaO$) of the composition.

Thus, the relation between the content of Er and the chromaticity of glass was quantitatively grasped.

And, Table 2 shows the obtained finding.

TABLE 2

|  |  | Case 5 | Case 6 | Case 7 | Case 8 | Case 9 | Case 10 | Case 11 | Case 12 |
|---|---|---|---|---|---|---|---|---|---|
| $t-Fe_2O_3$ | (%) | 0.1 | 0.1 | 0.1 | 0.1 | 0.1 | 0.1 | 0.1 | 0.1 |
| $Er_2O_3$ | (%) | 0.01 | 0.06 | 0.18 | 0.30 | 0.60 | 1.21 | 2.21 | 3.91 |
| Tvc | (%) | 90.4 | 90.3 | 89.9 | 89.5 | 86.9 | 88.1 | 84.6 | 81.5 |
| x |  | 0.310 | 0.310 | 0.310 | 0.310 | 0.311 | 0.313 | 0.314 | 0.317 |
| y |  | 0.317 | 0.317 | 0.316 | 0.316 | 0.314 | 0.311 | 0.308 | 0.303 |
| Dw | (nm) | 517 | 509 | 492 | -524 | -520 | -517 | -518 | -518 |
| Pe | (%) | 0.23 | 0.18 | 0.10 | 0.26 | 1.18 | 2.47 | 4.28 | 6.60 |
| Tva | (%) | 90.2 | 90.2 | 89.8 | 89.5 | 88.4 | 87.6 | 85.7 | 83.1 |
| Te | (%) | 85.4 | 85.5 | 85.0 | 85.2 | 83.9 | 84.4 | 82.9 | 81.2 |
| Tuv | (%) | 61.7 | 63.4 | 61.5 | 61.5 | 57.1 | 56.4 | 52.8 | 48.2 |

In Table 2, "x" and "y" represent the chromaticity coordinate in the XYZ color system. Further, in Table 2, Dw represents the dominant wavelength $\lambda d$ or $\lambda c$ (complementary dominant wavelength Ac in Table 3).

Tuv represents the ultraviolet transmittance and is a value measured in accordance with the method as prescribed in ISO9050 (1990).

As shown in Table 2, the present inventors have investigated the change in the chromaticity of glass by the Er content and have quantitatively grasped to what extent the chromaticity changes to the warm color system. On the basis of such a finding, the present inventors have arrived at the present invention which present, for example, the respective compositions as shown in the following Examples.

EXAMPLES

With respect to Examples 1 to 6 and Comparative Examples 1 to 3, raw materials for the respective components were mixed and, by means of a platinum crucible, heated and melted at a temperature of 1,480°C for 3 hours. Here, in all Examples, the matrix composition of glass was adjusted to be $SiO_2:Al_2O_3:Na_2O:K_2O:CaO:MgO:BaO=72:1.8:12:0.5:11:2.5:0$ (the numerical values here respectively represent mass%).

At the time of melting, a platinum stirrer was inserted, and stirring was carried out for one hour to homogenize the glass. Then, molten glass was cast and formed into a plate, followed by annealing. The obtained glass had a thickness of 4.0 mm.

And, with respect to each sample, the respective component contents, Tva, Te, Pe, $\lambda d$ or $\lambda c$, and chromaticity coordinate (x, y) were measured by the above-described methods. Further, the ultraviolet transmittance (Tuv) was also measured. Tuv is a value measured by the method as prescribed in ISO9050 (1990).

TABLE 3

| | | Ex. 1 | Ex. 2 | Ex. 3 | Ex. 4 | Ex. 5 | Ex. 6 | Comp. Ex. 1 | Comp. Ex. 2 | Comp. Ex. 3 |
|---|---|---|---|---|---|---|---|---|---|---|
| $SO_3$ | (%) | <0.01 | | | <0.01 | <0.01 | <0.01 | | | |
| t-$Fe_2O_3$ | (%) | 0.176 | 0.178 | 0.246 | 0.225 | 0.241 | 0.242 | 0.36 | 0.955 | 0.13 |
| FeO | (%) | 0.137 | 0.13 | 0.14 | 0.143 | 0.142 | 0.145 | | | |
| Redox | (%) | 86.5 | 81.2 | 63.2 | 70.6 | 65.5 | 66.6 | 52 | 22.9 | |
| $TiO_2$ | (%) | 0.21 | | | 0.22 | 0.22 | 0.22 | | | |
| $CeO_2$ | (%) | 3 | | | 3.02 | 3.01 | 3.01 | | | |
| Se | (ppm) | 21 | 8 | 2 | 5 | 3 | 3 | | | |
| CoO | (%) | 0.0002 | 0 | 0 | 0 | 0 | 0 | | | |
| SnO | (%) | | | 0.24 | 0.24 | Not measured | Not measured | | | |
| $Er_2O_3$ | (%) | 0.4 | 0.39 | 1.36 | 1.28 | 1.28 | 1.28 | | | |
| Tva | (%) | 70.3 | 70.8 | 72.8 | 71.6 | 72.0 | 71.1 | 71.3 | 35.8 | 72.1 |
| Te | (%) | 49.0 | 47.8 | 49.1 | 48.4 | 48.4 | 48.0 | 47.5 | 32.4 | 73.7 |
| Tuv | (%) | 7.50 | 7.37 | 5.87 | 6.02 | 5.91 | 5.89 | | | |
| x | | 0.31 | 0.31 | 0.31 | 0.31 | 0.31 | 0.31 | | | |
| y | | 0.32 | 0.32 | 0.31 | 0.32 | 0.32 | 0.32 | | | |
| Dw | (nm) | 570 | 560 | -545 | 608 | 699 | -500 | 552 | | |
| Pe | (%) | 3.39 | 1.91 | 0.73 | 0.93 | 0.35 | 0.67 | 2.10 | 0.41 | 0.01 |

As shown in Table 3, Examples 1 to 6 representing the glass of the present invention are glasses which simultaneously satisfy that Tva is high (at least 60%), Te is low (at most 60%), Pe is low (at most 6.0%), and $\lambda d$ (in Table 3, the dominant wavelength is represented by Dw) is from 560 nm to 780 nm, or glasses which simultaneously satisfy that Tva is high (at least 60%), Te is low (at most 60%), Pe is low (at most 6.0%), and $\lambda c$ (in Table 3, the complementary dominant wavelength is represented by Dw) is from -550 to -492 nm.

Whereas, in Comparative Example 1, Redox was low, Er was not used, and $\lambda d$ or $\lambda c$ was outside the range of the present invention. That is, the color was not a warm color system, but was a cold color system.

Further, in Comparative Example 2, Redox was low, whereby Se having a high coloring effect and Co were used in large amounts to accomplish achromaticity, whereby Tva was low.

Further, in Comparative Example 3, t-$Fe_2O_3$ was high, but Redox was low, whereby FeO was less. As a result, Te was high.

INDUSTRIAL APPLICABILITY

According to the present invention, it is possible to present a high transmittance light-colored glass which is provided with a visible light transmittance and heat-shielding property suitable as a glass plate for a windshield, side window, rear window or other windows for a vehicle and which has an extremely preferred soft color of a warm color system, and such a high transmittance light-colored glass of the present invention is useful as a window glass for an automobile or other vehicles.

The entire disclosure of Japanese Patent Application No. 2009-187726 filed on August 13, 2009 including specification, claims and summary is incorporated herein by reference in its entirety.

**Claims**

1. A high transmittance light-colored glass comprising, as represented by mass% calculated as the following oxides (except for Se), as a glass matrix composition,

$SiO_2$: from 63 to 75 mass%,
$Al_2O_3$: from 0 to 5 mass%,
$Na_2O$: from 5 to 15 mass%,
$K_2O$: from 0 to 5 mass%,
CaO: from 5 to 15 mass%, and
MgO: from 0 to 10 mass%,
and as coloring components,
$Er_2O_3$: from 0.3 to 3.0 mass%,
t-$Fe_2O_3$: from 0.05 to 0.5 mass%, and
Se: from 1 to 30 ppm,

and having
Redox: more than 62%.

2. The high transmittance light-colored glass according to Claim 1, which has, in a glass plate having a plate thickness of 4 mm,

visible light transmittance (Tva): at least 60%,
solar transmittance (Te): at most 60%,
excitation purity (Pe): at most 6.0%, and
dominant wavelength ($\lambda$d): from 560 to 780 nm, or complementary dominant wavelength ($\lambda$c): from -550 to -492 nm.

3. The high transmittance light-colored glass according to Claim 1 or 2, comprising, as represented by mass% calculated as the following oxides (except for Se), as a glass matrix composition,

$SiO_2$: from 69 to 73 mass%,
$Al_2O_3$: from 1.5 to 3 mass%,
$Na_2O$: from 8 to 13 mass%,
$K_2O$: from 0 to 3 mass%,
CaO: from 7 to 13 mass%, and
MgO: from 1 to 8 mass%,
and as coloring components,
$Er_2O_3$: from 0.4 to 1.4 mass%,
t-$Fe_2O_3$: from 0.1 to 0.3 mass%, and
Se: from 1 to 6 ppm,

and having
Redox: more than 62% and at most 74%.

4. The high transmittance light-colored glass according to Claim 1 or 2, comprising, as represented by mass% calculated as the following oxides (except for Se), as a glass matrix composition,

SiO$_2$: from 69 to 73 mass%,
Al$_2$O$_3$: from 1.5 to 3 mass%,
Na$_2$O: from 8 to 13 mass%,
K$_2$O: from 0 to 3 mass%,
CaO: from 7 to 13 mass%, and
MgO: from 1 to 8 mass%,
and as coloring components,
Er$_2$O$_3$: from 0.4 to 1.4 mass%,
t-Fe$_2$O$_3$: from 0.1 to 0.3 mass%, and
Se: from 6 to 30 ppm,

and having
Redox: more than 74% and at most 95%.

5. A process for producing a high transmittance light-colored glass, which comprises heating and melting glass raw materials within a temperature range of from 1,480°C to 1,660°C so that the glass composition after the production would be, as represented by mass% calculated as the following oxides (except for Se), as a glass matrix composition,

SiO$_2$: from 63 to 75 mass%,
Al$_2$O$_3$: from 0 to 5 mass%,
Na$_2$O: from 5 to 15 mass%,
K$_2$O: from 0 to 5 mass%,
CaO: from 5 to 15 mass%, and
MgO: from 0 to 10 mass%,
and as coloring components,
Er$_2$O$_3$: from 0.3 to 3.0 mass%,
t-Fe$_2$O$_3$: from 0.05 to 0.5 mass%, and
Se: from 1 to 30 ppm,

and would have
Redox: more than 62%.

**EP 2 465 830 A1**

| | INTERNATIONAL SEARCH REPORT | International application No. |
|---|---|---|
| | | PCT/JP2010/063777 |

A.   CLASSIFICATION OF SUBJECT MATTER
*C03C4/02*(2006.01)i, *C03C3/095*(2006.01)i, *B60J1/00*(2006.01)n

According to International Patent Classification (IPC) or to both national classification and IPC

B.   FIELDS SEARCHED

Minimum documentation searched (classification system followed by classification symbols)
C03C1/00-14/00, B60J1/00

Documentation searched other than minimum documentation to the extent that such documents are included in the fields searched
Jitsuyo Shinan Koho      1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)
INTERGLAD

C.   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2009-507753 A  (PPG INDUSTRIES OHIO, INC.),<br>26 February 2009 (26.02.2009),<br>claims 1, 6, 14, 15; paragraphs [0002], [0017],<br>[0036] | 1-3<br>5<br>4 |
| X<br>Y | JP 5-97469 A  (Nippon Sheet Glass Co., Ltd.),<br>20 April 1993 (20.04.1993),<br>claims; paragraphs [0017], [0018]; table 1 | 1-4<br>5 |
| Y<br>A | JP 2003-342040 A  (Central Glass Co., Ltd.),<br>03 December 2003 (03.12.2003),<br>claims; paragraphs [0001], [0052]; tables 1, 2 | 5<br>1-4 |
| Y<br>A | JP 2003-12342 A  (Nippon Sheet Glass Co., Ltd.),<br>15 January 2003 (15.01.2003),<br>claims; paragraph [0033]; tables 1, 2 | 5<br>1-4 |

☒  Further documents are listed in the continuation of Box C.      ☒  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 November, 2010 (08.11.10) | 22 November, 2010 (22.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

13

| **INTERNATIONAL SEARCH REPORT** | International application No. |
|---|---|
| | PCT/JP2010/063777 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-327366 A  (Nippon Sheet Glass Co., Ltd.),<br>28 November 2000 (28.11.2000),<br>claims | 1-5 |
| A | US 2005/0170944 A1  (Mehran ARBAB),<br>04 August 2005 (04.08.2005),<br>claims | 1-5 |

Form PCT/ISA/210 (continuation of second sheet) (July 2009)

| INTERNATIONAL SEARCH REPORT | International application No. |
|---|---|
| Information on patent family members | PCT/JP2010/063777 |

| | | |
|---|---|---|
| JP 2009-507753 A | 2009.02.26 | US 2007/0054796 A1<br>EP 1922294 A1<br>WO 2007/030354 A1<br>CN 101258110 A<br>RU 2380329 C |
| JP 5-97469 A | 1993.04.20 | US 5264400 A<br>DE 4234099 A1<br>FR 2682372 A |
| JP 2003-342040 A | 2003.12.03 | (Family: none) |
| JP 2003-12342 A | 2003.01.15 | US 2003/0083188 A1<br>US 2004/0186001 A1<br>EP 1270524 A1<br>DE 60206445 T |
| JP 2000-327366 A | 2000.11.28 | US 6333287 B1<br>EP 1055646 A1<br>DE 60001869 T |
| US 2005/0170944 A1 | 2005.08.04 | US 2007/0214833 A1 |

Form PCT/ISA/210 (patent family annex) (July 2009)

| INTERNATIONAL SEARCH REPORT | International application No. |
|---|---|
| | PCT/JP2010/063777 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The invention in claim 1 does not have novelty and a special technical feature since the invention is described in the following document 1, and consequently, the invention in claim 1 does not comply with the requirement of unity.
    The inventions in claims as indicated below are relevant to main invention.

    Claims 1 - 3, 5
    Document 1: JP 2009-507753 A

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200799788 B
- JP 2006298657 A

- JP 2009187726 A